(19) Europäisches Patentamt
European Patent Office
Office européen des brevets

(11) Numéro de publication: **0 110 928 B1**

(12) **FASCICULE DE BREVET EUROPEEN**

(45) Date de publication du fascicule du brevet: **05.09.90**

(51) Int. Cl.$^5$: **G 05 B 19/04**

(21) Numéro de dépôt: **83901718.3**

(22) Date de dépôt: **02.06.83**

(86) Numéro de dépôt international: **PCT/FR83/00108**

(87) Numéro de publication internationale: **WO 83/04321 08.12.83 Gazette 83/28**

(54) **DISPOSITIF MODULAIRE DU PILOTAGE DE PROCESSUS INDUSTRIELS.**

(30) Priorité: **04.06.82 FR 8209755**

(43) Date de publication de la demande: **20.06.84 Bulletin 84/25**

(45) Mention de la délivrance du brevet: **05.09.90 Bulletin 90/36**

(84) Etats contractants désignés: **AT BE CH DE GB LI NL SE**

(56) Documents cités:
**DE-A-3 034 728**
**DE-B-1 244 277**
**FR-A-2 456 966**

**Le dossier contient des informations techniques présentées postérieurement au dépôt de la demande et ne figurant pas dans le présent fascicule.**

(73) Titulaire: **ROPELATO, Michel**
**22/24 rue Marceau**
**F-92170 Vanves (FR)**

(72) Inventeur: **ROPELATO, Michel**
**22/24 rue Marceau**
**F-92170 Vanves (FR)**

(74) Mandataire: **Dejoux, André**
**33, rue de Fontarabie**
**F-75020 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 110 928 B1

## Description

L'invention concerne un dispositif modulaire de pilotage de processus industriels se définissant par un diagramme fonctionnel comportant une pluralité d'étapes, successives ou simultanées, interdépendantes ou non.

On connait déjà de tels dispositifs mais ils sont incomplets. On connait ainsi des composants ou cellules de logique élémentaire simple destinés à être assemblés au sein d'un ensemble de commandes d'automatisation, dit en logique câblée, chaque cellule ne permet qu'une fonction élémsntaire telle que ET, OU, NON mémorisation, comptage, temporisation ... l'extrême simplicité de ces dispositifs nécessite, pour tout processus industriel un tant soit peu élaboré, que l'on veut automatiser, une analyse préalable par un spécialiste automaticien familier avec des notions telles que l'algèbre de Boole, les diagrammes de phase ou les tables de vérité. La réalisation pratique de tels ensembles de commande d'automatisation, généralement en technologie pneumatique ou électronique fait intervenir de nombreuses liaisons en tuyauterie ou en filerie parfois suffisamment nombreuses pour conduire à des tableaux ou châssis très encombrés. Le dépannage de telles installations, la recherche des défauts et leur suppression réclament donc des spécialistes. La haute spécialisation requise de la part des concepteurs, des réalisateurs et des dépanneurs de telles installation conduit le plus souvent à des délais et des coûts importants. La mise en oeuvre de composants de logique élémentaire, quoique simples et bon marché, conduit donc assez souvent à des coûts s'avérant en fin de compte excessifs compte tenu de la relative simplicité des opérations qu'ils contribuent à automatiser.

Il existe, à l'opposé, des dispositifs tels que des automates programmables. Leur technologie très élaborée faisant intervenir mémoires, microprocesseurs et autres éléments de calcul performants leur confère un prix d'achat généralement élevé. De plus ils font appel le plus souvent à un langage de programmation nécessitant l'intervention d'informaticiens et autres spécialistes capables de procéder aux études de processus requises pour la mise en service des installations choisies, puis, ultérieurement, à leur surveillance et à leur maintenance. Ces automates programmables sont généralement conçus pour l'automatisation de processus compliqués; aussi faut-il constater que, pour de nombreux processus industriels en particulier dans le domaine des petites et moyennes entreprises, ils s'avèrent beaucoup trop performants, et donc coûteux, pour pouvoir raisonnablement être appliqués.

Entre ces deux extrêmes de complexité existent déjà des séquencers à déroulement répétitif ou non, adaptés à commander une succession d'actons. De tels séquenceurs ne permettent cependant pas à eux seuls les bouclages, aiguillages conditionnels, temporisations individuelles, comptages et autres opérations pourtant très courantes dans les processus industriels les moins élaborés.

Il existe en outre un système modulaire, présenté dans le brevet français 2 456 966, pour la rélisation d'une commande d'automatisme à partir d'un graphique (GRAFCET) ou diagramme synoptique définissant ledit automatisme sous la forme d'un ensemble d'étapes, de transitions et de liaisons orientées, comportant une pluralité de modules de base, de transition et de liaison, constitués chacun par un bloc sur une face duquel figure le dessin de l'étape, dont chacun d'eux est associé à une étape dudit graphique, chaque module de base comportant une sortie sur laquelle il est capable de faire apparaître un signal de début d'étape, une entrée susceptible de recevoir un signal de fin d'étape, une entrée et une sortie constituant une ligne d'inscription, ainsi qu'une entrée et une sortie constituant une ligne d'effacement, lesdits modules étant assemblés selon une chaîne telle que l'entrée d'inscription et la sortie d'effacement d'un module intermédiaire soient respectivement reliés à la sortie d'inscription et à l'entrée d'effacement du module précédent, tandis que l'entrée et la sortie sont respectivement reliées à la sortie et à l'entrée du module suivant; les différentes entrées et sorties du début et de fin d'étape sont reliées aux organes correspondants de l'automatisme; la réception d'un signal à l'entrée ou à la sortie soit active le module, soit émet un signal pour l'étape suivante ou désactive ce module.

Ce système nécessite un nombre important de modules différents ainsi que des modules de connexion pour le pilotage d'un seul actionneur; les fonctions assurées par ces modules ne recouvrent pas la totalité des fonctions types nécessaires pour le pilotage des actionneurs courants sur le marché. Le graphisme figuré sur les modules de base ne représente qu'une fraction d'étape.

Il apparaît en conséquence qu'il existe une importante lacune dans la gamme des dispositifs d'automatisation correspondant aux processes industriels de moyenne complexité et surtout de moyenne importance que l'on rencontre dans les petites et moyennes entreprises. L'application à leurs fabrications de dispositifs déjà existants conduit souvent à des coûts globaux prohibitifs qui tendent à freiner, voire empêcher l'amélioration de productivité que pourrait produire une automatisation rationnelle des processus industriels de cette catégorie d'industries et qui conditionne pourtant leur développement et parfois leur survie.

La présente invention à pour objet de combler cette lacune grâce à des moyens simples, pratiques, de coût plus en rapport avec l'importance de chaque problème et accessible sans guère de difficultés au personnel habituel des entreprises industrielles de toutes tailles. La présente invention propose à cet effet un dispositif de pilotage d'un processus industriel défini par un diagramme fonctionnel comportant un enchaînement d'étapes élémentaires pouvant comporter des choix, des aiguillages, des simultanéités ou des bouclages, ledit dispositif se composant d'un ensemble de modules qui, par leur assemblage, forment une structure synoptique représentative dudit diagramme fonctionnel, en même temps qu'une chaîne de commande correspondant à ce diagramme,

caractérisé en ce que les modules sont d'un seul type universel dans lequel est incorporé l'ensemble des fonctions types pouvant être nécessaires au traitement du fonctionnement d'un actionneur, chaque module comprenant ainsi un ensemble intégré des étapes élémentaires nécessaires à la gestion des séquences de fonctionnement dudit actionneur, ledit ensemble intégré se composant des moyens suivants:

a) un moyen (A) de décision en fonction d'un ordre d'une étape et d'une condition (CO), résultant à une signal d'étape transmis pour aboutir à une fonction de l'actionneur correspondant,

b) un premier moyen d'interface (B1) assurant, par une liaison, l'échange de signaux avec un module précédent,

c) un deuxième moyen d'interface (B2) assurant, par des liaisons, l'échange de signaux en amont dudit module avec des modules juxtaposés,

d) un troisième moyen d'interface (C1) assurant, par une liaison, l'échange de signaux avec un module suivant,

e) un quatrième moyen d'interface (C2) assurant, par des liaisons, l'échange de signaux en aval dudit module avec des modules juxtaposés,

f) des moyens (D) de gestion du fonctionnement dudit actionneur comprenant:

1) un sous-ensemble de transmission d'ordre (D1), muni d'une possibilité de branchement subordonnant la transmission du signal d'étape depuis le moyen de décision (A) à un évènement extérieur (K), par exemple venant d'un autre module,

2) un sous-ensemble (D2) de sortie vers l'actionneur, muni d'une possibilité, de branchement subordannant directement le signal d'action à ladite condition (C0),

3) un sous-ensemble d'alarme (D3), adapté à détecter la présence duufignal d'étape et celle du signal représentant la condition (C0) et comportant un organe de retard (R2), en vue de l'établissement d'un signal d'alarme et/ou d'aiguillage selon la présence ou l'absence de la condition (C0) avant expiration d'un intervalle de temps prédéterminé après l'arrivée du signal d'étape,

4) un sous-ensemble de retard (D4), adapté à différer la prise en compte du signal d'étape incident,

5) un sous-ensemble de remise à zéro (D5), permettant de déterminer la remise au repos du module, au choix, soit sous l'effet de la transmission du signal d'étape par le module à un ou plusieurs modules suivants, soit sous l'effet d'un signal en provenance d'un ou de plusieurs autres modules, et contenant un organe de retard (R3) en vue de différer, pendant un temps donné, la remise à zéro du module,

6) des éléments de sélection permettant, pour chacun des modules, de sélectionner tout ou partie desdites fonctions types nécessaires et suffisantes pour le fonctionnement de l'actionneur correspondant, et

caractérisé en outre en ce que les modules ainsi organisés sont construits de façon telle qu'ils puissent être assemblés par empilements et juxtapositions, de manière à ce que leur simple mise en place assure les liaisons entre modules adjacents ainsi que tous les enchaînements dudit diagramme fonctionnel, nécessaire pour un système de commande automatique comprenant plusieurs actionneurs.

En outre les caractéristiques particulières suivantes sont prévues.

Les modules comportent une face équipée de moyens de signalisation dynamique correspondant à des fonctions internes dans le module considéré et en rapport avec le fonctionnement dudit actionneur, géré par ce dernier, lesdits moyens de signalisation correspondant au déroulement des étapes relatives au fonctionnement de chaque actionneur.

La représentation du diagramme fonctionnel global est matérialisée par un ensemble d'illustrations schématiques fractionnaires associées chacune au fonctionnement de l'actionneur géré par le module correspondant et figurant sur ou en regard d'une face dudit module, chacune desdites illustrations schématiques complétant ainsi lesdits moyens de signalisation en conformité avec ledit diagramme fonctionnel.

Les éléments de sélection desdites fonctions types consistent en des moyens de commutation.

Les moyens d'interface (B2, C2) pour l'échange de signaux avec les modules juxtaposés sont également équipés d'éléments de sélection, en particulier de moyens de commutation pour permettre, pour chacun des modules ainsi équipés, un choix entre diverses possibilités de relations avec les modules associés.

Les modules sont embrochables entre eux, et sont équipés de moyens complémentaires de connexion adaptés à établir des liaisons intermodulaires directes, lesdits modules étant équipés de moyens de connexion avec des évènements extérieurs divers.

Selon une autre caractérisetique particulière de l'invention, les modules sont enfichables par au moins une face extérieure sur un panneau support commun comportant un réseau de faisceaux de liaison adapté à coopérer avec des barrettes recueillant, sur au moins ladite face de chaque module, l'ensemble des connexions de liaison entre ces modules et avec des évènements extérieurs divers.

Selon une autre caractéristique particulière de l'invention, une plaque, éventuellement transparente, recouvre une partie au moins des modules du dispositif et porte une représentation graphique d'au moins une partie du diagramme fontionnel du processus piloté par le dispositif.

Selon une autre caractéristique particulière de l'invention, le module universel comporte un ensemble de fonctions intégrées et peut être assemblé avec d'autres modules pour former ou non une structure synoptique représentative du diagramme fonctionnel d'un processus industriel, en même temps qu'une chaîne de commande correspondant à ce diagramme,

caractérisé en ce qu'un ensemble de fonctions types pouvant être nécessaires au traitement du fonctionnement d'un seul actionneur y est incorporé, ledit module comprenant ainsi un ensemble intégré d'étapes élémentaires nécessaires à la gestion des séquences de fonctionnement dudit actionneur, ledit ensemble intégré se composant des moyens suivants:

a) un moyen (A) de décision en fonction d'un ordre d'une étape et d'une condition (C0), résultant à un signal d'étape transmis pour aboutir à une action associée correspondant à la commande de fonctionnement dudit actionneur,

b) un moyen de connectique en une ou plusieurs parties assurant, à l'aide de liaisons d'interface, notammant par fils conducteurs extérieurs au module, les échanges de signaux divers émis ou reçus par ledit module, en rapport avec des évènements extérieurs et/ou d'autres modules,

c) un moyen (D) de gestion du fonctionnement dudit actionneur comprenant:

1) un sous-ensemble de transmission d'ordres (D1), muni d'une possibilité de branchement subordonnant la transmission du signal d'étape,

depuis le moyen de décision (A) à un évènement extérieur (K), ou venant d'un autre module,

2) un sous-ensemble (D2) de sortie vers l'actionneur, muni d'une possibilité de branchement subordonnant directement le signal d'action à ladite condition (C0),

3) un sous-ensemble d'alarme (D3), adapté à détecter la présence du signal d'étape et celle du signal représentant la condition (C0) et comportant un organe de retard (R2), en vue de l'établissement d'un signal d'alarme et/ou d'aiguillage selon la présence ou l'absence de la condition (C0) avant expiration d'un invertalle de temps prédéterminé après l'arrivée du signal d'étape,

4) un sous-ensemble de retard (D4), adapté à différer la pris en compte du signal d'étape incident,

5) un sous-ensemble de remise à zéro (D5), permettant de déterminer la remise au repos du module, au choix, soit sous l'effet de la transmission du signal d'étape par le module à un ou plusieurs modules suivants, soit sous l'effet d'un signal en provenance d'un ou plusieurs autres modules, ou d'évènements extérieurs, et contenant un organe de retard (R3) en vue de différer, pendant un temps donné, la remise à zéro du module,

6) des éléments de sélection permettant, pour chacun des modules, de sélectionner tout ou partie desdites fonctions types nécessaires et suffisantes pour le fonctionnement de l'actionneur correspondant et la coopération avec d'autres modules, et

caractérisé en outre par une construction telle qu'il puisse être relié ou non, au moyen de fils conducteurs, avec d'autres modules du même type, de manière à assurer la commande automatique d'un système comprenant un ou plusieurs actionneurs.

Au moins un module universel comporte au moins un moyen de technologie numérique et/ou logique, ou au moins un microprocesseur adapté à générer les fonctions types du module.

Les objets, caractéristiques et avantages de l'invention ressortent d'ailleurs de la description qui suit, donnée à titre d'exemple non limitatif, en regard des dessins annexés sur lesquels:

la figure 1 est un schéma d'organisation global d'un module;

la figure 2 est un schéma d'organisation interne d'un module;

la figure 3 est une vue en perspective d'un empilement de module selon un premier mode de réalisation;

la figure 4 est une vue en perspective d'un module selon le mode de réalisation de la figure 3;

la figure 5 est une vue en perspective d'un empilement de modules selon un deuxième mode de réalisation;

la figure 6 est une vue en perspective d'un module selon le mode de réalisation de la figure 5;

la figure 7 est un schéma logique détaillé d'une forme de réalisation d'un module selon l'invention;

la figure 8 est une vue schématique en perspective d'une installation de perçage;

la figure 9 est une vue en élévation du poste de perçage précité;

la figure 10 est un diagramme explicatif d'une opération de perçage sans débourrage des copeaux;

la figure 11 est un diagramme explicatif d'une opération de perçage avec débourrage des copeaux;

la figure 12 est un diagramme fonctionnel classique de l'installation de perçage de la figure 8;

la figure 13 est une version du diagramme fonctionnel de la figure 12, aménagée en vue de la mise en oeuvre de l'invention;

la figure 14 est une vue schématique d'un empilement de modules associé au diagramme fonctionnel de la figure 13;

la figure 15 est un schéma de câblage des rares liaisons intermodulaires qui subsistent selon l'empilement de la figure 14;

la figure 16 est un schéma de raccordement avec les évènements extérieurs réalisé selon l'empilement de la figure 14.

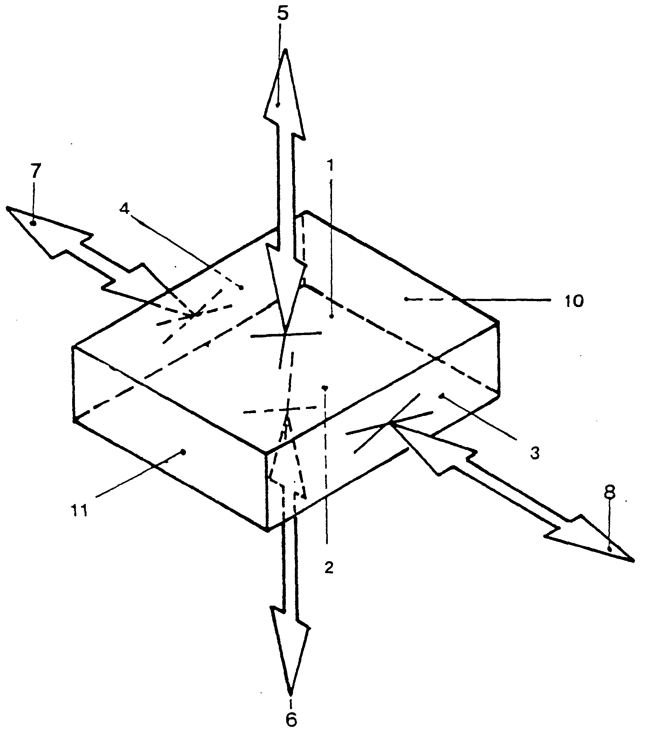

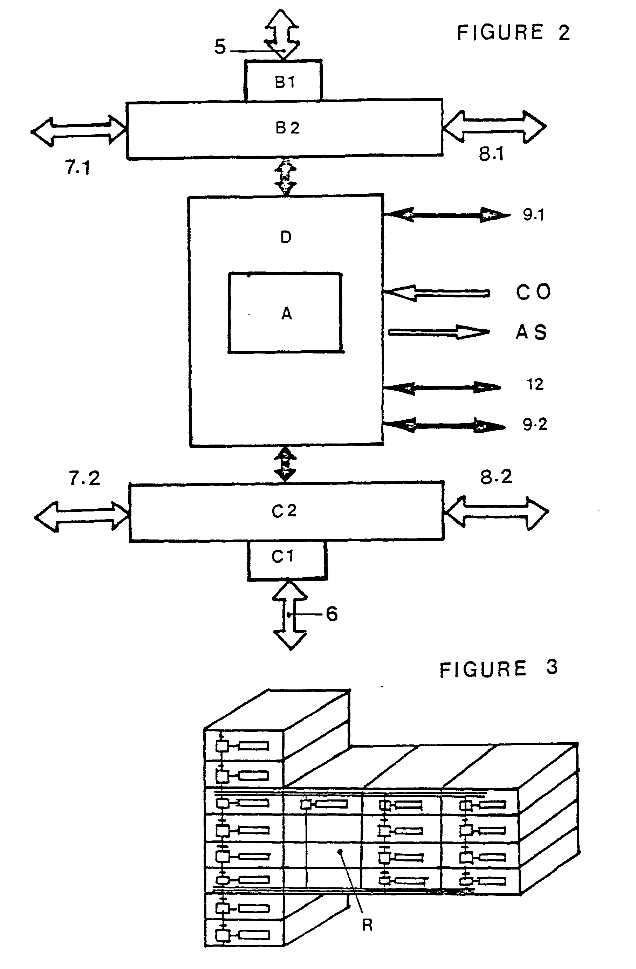

Les figures 1 et 2 illustrent de manière très schématique les structures externe et interne d'un module selon l'invention. Il apparaît ainsi que, au moins virtuellement, un tel module est assimilable à un parallélépipède orienté dans 1' espace, présentant des faces supérieure 1 et inférieure 2, des faces latérales droite 3 et gauche 4, et des faces arrière 10 et avant 11. Les faces supérieure, inférieure, et latérales sont dotées chacune de moyens de liaison avec des modules adjacents: les moyens 5 à 8 assurent respectivement une liaison du module avec les modules supérieur, inférieur, gauche et droit. Toute autre forme, voire même cylindrique ou sphérique est envisageable selon le même esprit.

Ainsi qu'il apparaît sur la figure 2 ces moyens de liaison 5 à 8 sont connectés, à l'intérieur du module à des ensembles A, B, C et D. Un ensemble de décision A assure la prise en compte simultanée ou non d'un signal ou ordre d'étape OE et d'une condition CO. Un ensemble de traitement D assure la gestion des divers signaux et la coordination des mises en oeuvre des divers composants; il assure en particulier l'enclenchement d'une action associée AS. Un ensemble B assure les échanges de signaux intervenant en amont de l'ensemble D; il se compose d'un sous-ensemble amont B1 d'échanges verticaux assurant avec la liaison 5 les échanges avec le module immédiatement supérieur, et d'un sous-ensemble amont B2 d'échanges latéraux qui coopère avec des parties 7.1 et 8.1 des liaisons 7 et 8 pour assurer les échanges d'informations avec les modules immédiatement adjacents à droite et à gauche. Un ensemble aval C assure de son côté les échanges de signaux intervenant en aval des ensembles A et D; il se décompose en un sous-ensemble aval C1 d'échanges verticaux avec le module immédiatement inférieure grâce à la liaison 6, et un sous-ensemble aval C2 d'échanges latéraux assurant les échanges avec les modules voisins grâce aux parties 7.2 et 8.2 des liaisons 7 et 8. Il est à noter que l'ensemble D coopère avec des moyens de liaisons 9.1, 9.2 et 12 différents de ceux communiquant avec les cellules voisines, en vue d'assurer respectivement la liaison du module avec des évènements extérieurs secondaires en amont ou en aval de l'action associée, et avec des circuits ou alimentations communs à plusieurs modules.

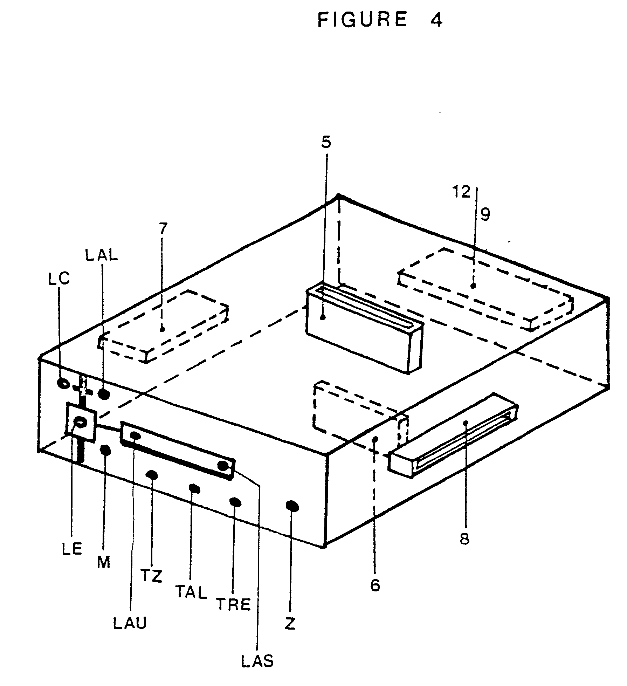

Les figures 3 et 4 d'une part, 5 et 6 d'autre part, illustrent deux types de dispositif de pilotage selon l'invention correspondant à deux modes différents d'obtention d'empilements de modules. Les modules y sont représentés comme des parallélépipèdes réels, assimilables à des briques.

La figure 3 représente un empilement de modules ou briques obtenu par embrochage réciproque. Il apparaît sur la figure 4 que les moyens ou organes de liaison d'un module sont alors constitués de moyens complémentaires d'embrochage, des barrettes 7 et 6, et des fentes d'embrochages 5 et 8. Les moyens de liaisons 12 et 9 sont constitués d'une barrette en saillie sur la face arrière du module.

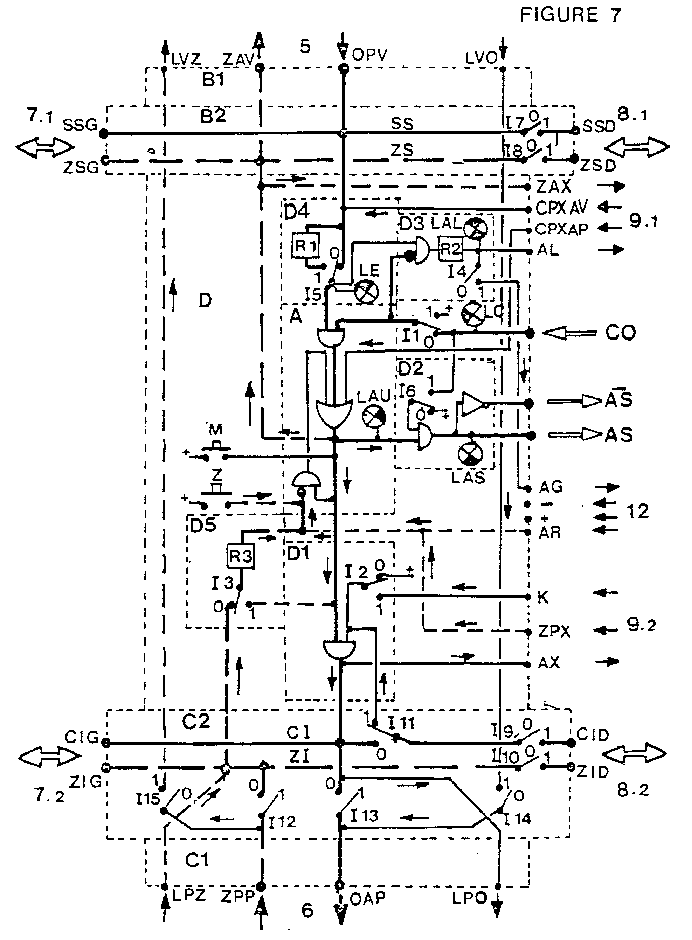

Ainsi que cela apparaît sur les figures 3 et 4, la face avant des modules porte avantageusement des indications précisant la fonction du module en question, de manière à former après embrochage réciproque une représentation graphique du diagramme fonctionnel de l'automatisme constitué par ledit empilement de briques. La face avant du module de la figure 4 présente en outre des moyens d'action manuelle et de signalisation en rapport avec les fonctions internes du module. Des commandes manuelles M et Z assurent le lancement ou l'arrêt du processus au niveau de l'étape considérée, tandis que des organes TZ, TAL, TRE permettent un réglage d'organes internes R1, R2 et R3 dont le rôle, ainsi que celui d'éléments de signalisation tels que LC, LE, LAU ou LAS apparaîtra plus loin, à propos de la figure 7.

Plutôt que de mettre en oeuvre de la filerie, des briques de remplissage R sont avantageusement disposées entre certaines briques à connecter.

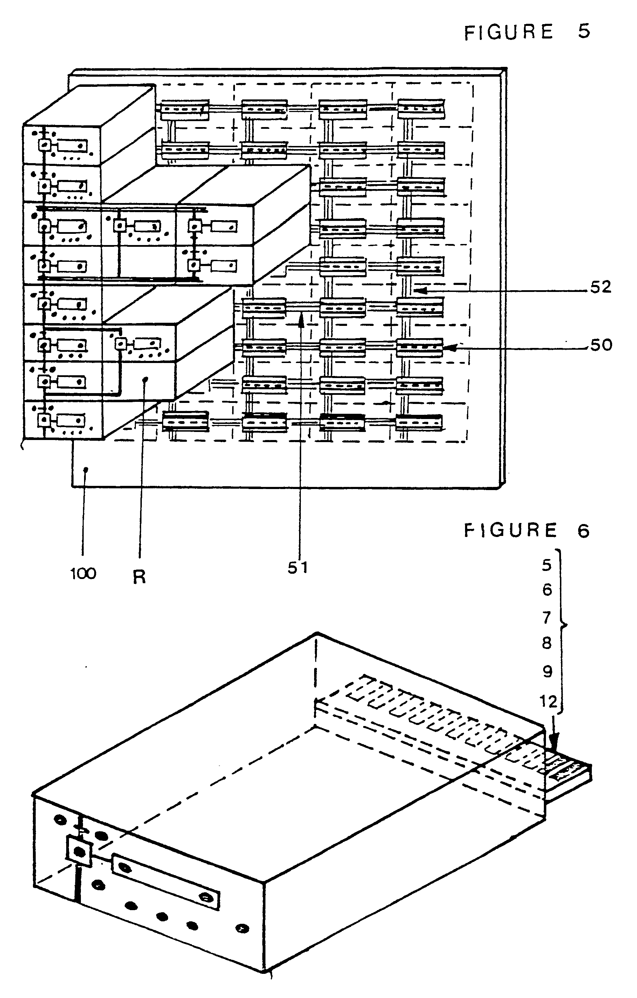

Les figures 5 et 6 représentent des modules dont l'empilement s'obtient par enfichage sur un support 100 par une barrette de connexion 50 assurant l'ensemble des liaisons 5, 6, 7, 8, 9 et 12, ledit support présentant à cet effet des fentes de connexion interconnectées de manière appropriée par des faisceaux de liaison 51, 52. Comme précédemment des indications graphiques et des éléments de signalisation sont avantageusement reportés sur la face avant des modules en vue de constituer une représentation graphique du diagramme fonctionnel associé à l'automatisme assuré par l'empilement des modules. Des connexions électriques au dos du tableau-support 100 assurent des liaisons entre modules éloignés ainsi que le raccordement de tous les évènements extérieurs.

La figure 7 est une vue détaillée de la structure interne d'un module tel que schématisée sur la figure 2. Il s'agit ici d'un module que l'on peut qualifier de semi-universel en raison de la présence de micro-interrupteurs en permettant une pseudo-programmation comme il sera expliqué ci-après. La structure du module de la figure 7 correspond à une technologie électronique et est avantageusement matérialisée par exemple sur un circuit imprimé.

On retrouve les divers éléments cités à propos de la figure 2.

Le sous-ensemble B1 d'échanges amont verticaux comporte quatre broches de raccordement ZAV, OPV, LVO et LVZ qui contribuent à la liaison 5.

Le sous-ensemble B2 d'échanges amont latéraux comporte un premier bus SS, relié à la broche OPV, et relié à des broches SSG et SSD de liaison avec les modules gauche et droit. Ce sous-ensemble B2 comporte un second bus ZS relié à la broche ZAV et à des broches ZSG et ZSD correspondant respectivement à des liaisons avec les modules situés à gauche et à droite. Des micro-interrupteurs I7 et I8, figurés près des bornes externes droites SSD et ZSD sur les bus SS et ZS respectivement, permettent, en position ouverte (O), de supprimer tout échange amont entre le module représenté et son voison de droite. Pour empêcher tout échange avec le module de gauche il suffit de disposer les micro-interrupteurs qui y sont contenus en position ouverte (ou O). Les positions "1" correspondent bien évidemment à la fermeture des liaisons, c'est-à-dire à la possibilité d'échanges avec les modules voisins.

Du côté aval du module, le sous-ensemble CI d'échanges aval verticaux comporte quatre broches de raccordement ZPP, OAP, LPZ et LPO contribuant à la liaison 6. Des micro-interrupteurs

I12 et I13 permettent d'établir ou d'interrompre cette liaison 6, en ce que concerne ZPP et OAP.

Le sous-ensemble C2 d'échanges aval latéraux comporte un premier bus ZI relié, d'une part aux broches ZPP et LPZ et d'autre part à des broches ZIG et ZID correspondant respectivement à des liaisons avec les modules situés à gauche et à droite. Ce sous-ensemble commorte un second bus CI en deux parties reliées, la première aux broches OAP et LPO et à une broche CIG, et la seconde à la broche CID. Un micro-inverseur I11 relie, par commutation, cette seconde partie de deux façons: soit, pour liaison directe avec LPO, CIG et, en coopération avec I13, avec OAP, soit pour raccordement à une entrée d'une porte logique ET faisant partie d'un sous-ensemble D1 décrit ci-après. Des micro-interrupteurs I9 et I10 permettent d'établir ou d'interrompre la liaison 8.2 avec le module situé à droite. Les broches LVZ et LVO du sous-ensemble B1 d'une part, et les broches ZPP et OAP du sous-ensemble C1 d'autre part permettent, lorsque des micro-interrupteurs I14 et I15 sont fermés (position 1), d'établir les liaisons verticales 5—6 directement entre le module qui précède le module concerné et le module qui le suit sans que le dit module n'ait à intervenir.

L'ensemble de traitement D comporte un sous-ensemble de retard D4 intercalé entre la broche OPV, reliée à une broche complémentaire CPXAV, et l'ensemble de décision A. Un microinverseur I5 établit en position O une liaison directe avec l'ensemble A ainsi qu'avec un voyant LE ou lampe d'étape, mais fait intervenir en position 1 un organe de temporisation ou de retard R1.

L'ensemble de décision A comporte à son entrée un circuit logique ET, dont une des entrées est reliée à I5, suivi d'un circuit logique OU. A l'entrée de ce dernier circuit est reliée, outre une broche complémentaire CPXAP, la sortie d'un second circuit logique ET dont l'une des entrées est complémentée. L'entrée directe de ce dernier est reliée à la sortie du circuit logique OU tandis que son entrée complémentée est reliée à un sous-ensemble D5 ci-après décrit, à des broches AR et ZPX et à un bouton-poussoir Z. La sortie du circuit OU, ou de l'étape A, est liée à un sous-ensemble D1 de transmission d'ordre ainsi que, d'une part à la broche ZAV et à une broche ZAX participant à la liaison 9.1, d'autre part à un sous-ensemble d'action D2, et à un bouton-poussoir M relié à un signal de valeur logique 1, matérialisé par exemple par une polarité positive.

A la broche OPV, est branchée, outre D4, un sous-ensemble D3 d'alarme comportant un circuit logique ET dont l'une des entrées est complémentée, suivi d'un organe de temporisation ou retard R2 relié à une broche AL et à une lampe d'alarme LAL; un micro-interrupteur I4 assure également, en position fermée (1), la liaison de R2 avec une broche AG d'alarme générale centralisée. L'ensemble D comporte en outre une broche CO reliée à une lampe LC de condition. Un micro-inverseur I1 relie l'autre entrée du premier circuit ET d l'ensemble de décision A ainsi que l'entrée complémentée du circuit logique ET de D3, en position O, à cette broche CO, et en position 1, à un signal permanent de valeur logique 1.

Le sous-ensemble D1 précité de transmission d'ordre comporte un circuit logique ET dont l'une des entrées est reliée à la sortie de l'ensemble A. Une seconde entrée est reliée d'une part sélectivement, par un micro-inverseur I2, à un signal de valeur logique 1, (position O), ou à une broche K (position 1), et d'autre part à l'un des plots du micro-inverseur I11 précité au titre du sous-ensemble C2. La sortie dudit circuit logique ET est reliée à l'autre plot de I11, et à une broche AX.

Le sous-ensemble d'action D2 d'autorisation de l'action associée comporte tout d'abord un circuit logique ET dont une entrée, couplée avec un voyant LAU d'autorisation, est liée à la sortie de l'ensemble A tandis qu'une seconde entrée est alimentée, au travers d'un micro-interrupteur I6, à la borne CO précitée (position 1), ou à un signal de valeur logique 1 (position O). La sortie de ce circuit logique ET est reliée à un voyant LAS d'ordre d'action associée, à une broche AS et, au travers d'un inverseur de signal, à une broche $\overline{AS}$.

Le sous-ensemble de remise à zéro D5 déjà cité comporte un organe de temporisation ou de retard R3 alimenté, par un micro-inverseur I3, par la sortie de l'ensemble A (position 1), ou par le bus ZI (position O). La sortie de R3 est reliée à l'entrée complémentée du circuit logique ET de l'étage A.

On peut noter que les micro-commutateurs I1 à I6 permettent une pseudo-programmation du module, en fonction d'options choisies, selon les positions qu'un utilisateur leur fixe. Les micro-commutateurs I7 à I15, quant à eux, assurent les liaisons intermodulaires telles que prévues sur le diagramme fonctionnel. Les boutons-poussoirs sont au repos en position ouverte; leur fermeture s'effectue par pression par exemple, et correspond à une position instable.

Pour chaque module sont en outre prévus deux broches + et − d'alimentation.

Les broches ZAX, CPXAV CPXAP et AL correspondent à la liaison 9.1, les broches AG, +, −, AR à la liaison 12, et les broches K, AX et ZPX à la liaison 9.2. Les broches CO, AS et $\overline{AS}$ correspondant à des évènements extérieurs au dispositif modulaire sont accessibles à des liaisons adaptées.

En fonctionnement, un ordre d'étape OE est transmis au sous-élément de retard D4, soit par la broche OPV en provenance du module avant, soit par l'une des broches SSG ou SSD du bus SS qui permet d'assurer une simultanéité supérieure avec des modules voisins, soit encore par la broche CPXAV en liaison avec un évènement extérieur ou un autre module quelconque. Compte-tenu de la position de I5 tel que représenté sur la figure 7, le sous-élément de retard D4 n'effectue aucune temporisation. La transmission de l'ordre d'étape OE à l'étage de décision A est visualisée par le voyant LE.

Le signal OE est également pris en compte par le sous-élément D3 d'alarme-relais, à l'entrée directe de son circuit logique ET.

Si un signal de condition CO est présent à la broche CO, auquel cas la lampe LC s'éclaire, il est tranmis par le micro-interrupteur I1 à une seconde entrée du circuit ET de l'étage A, qui délivre alors un signal non nul à l'entrée du circuit logique OU qui le suit. Le signal CO est transmis en parallèle à l'entrée complémentée du circuit logique ET de D3 qui cesse alors de délivrer un signal non nul à l'entrée de R2. Cet organe de retard R2 est réglé en fonction du décalage maximal en temps toléré entre les arrivées des signaux OE et CO. Si CO tarde trop, R2 délivre un signal d'alarme qui alimente la lampe LAL et la borne AL. Si l'interrupteur I4 est fermé (en position 1), le signal d'alarme est transmis à la borne AG, impliquant alors en général l'excitation d'une alarme générale centralisée, ou bien par exemple, un aiguillage vers un autre module. La commutation en 1 du micro-interrupteur I1 supprime toute prise en compte de la condition CO de validation de l'ordre d'étape.

Le circuit logique OU de l'étape A est alimenté soit par le circuit ET précédent, soit par la broche CPXAP, soit par la sortie du second circuit logique ET de l'étage A. Lorsque l'une au moins de ses trois entrées reçoit un signal, le circuit logique OU délivre simultanément un signal aux sous-éléments D2 d'autorisation de l'action, et D1 de transmission d'ordre; le voyant LAU signale que l'action associée est autorisée. Selon qu'un signal extérieur est reçu par la broche CPXAV ou la broche CPXAP, un signal d'autorisation est délivré avec ou sans prise en compte de la présence de la condition CO. Ce signal est également reçu par le second circuit logique ET de A qui, tant qu'il ne reçoit pas un signal à son entrée complémentée, délivre un signal à l'entrée dudit circuit OU: le bouclage de ces circuits ET et OU assure donc un effet de mémorisation, un signal d'autorisation continuant à être délivré même après la disparition des signaux provenant du premier circuit ET ou de la broche CPXAP, y comprise après celle de la condition CO.

Simultanément le signal de transmission est transmis par la broche ZAV au module précédent qui le reçoit par sa broche ZPP et pour lequel il sert de signal de remise à zéro; il en est de même pour un module éloigné qui lui serait raccordé par la broche ZAX, ou pour les modules droit et gauche jouxtant le module précédent, par l'intermédiaire du bus ZS de remise à zéro supérieur. Compte tenu de la position de I6 le circuit ET de D2 délivre un signal à la broche AS en vue d'enclencher l'action associée au module. La lampe LAS témoigne de la transmission de cet ordre. L'inverseur délivre un ordre d'action associée inverse à la broche $\overline{AS}$. Si le micro-interrupteur I6 est en position 1, l'enclenchement de l'action associée par le signal d'autorisation est subordonné à la présence de la condition CO qui est alors une condition non seulement d'enclenchement mais également de maintien de l'action associée. On dit alors que le signal en AS est modulé en fonction de la condition CO. Le bouton-poussoir M de D1 permet la délivrance d'un ordre d'autorisation à la place de l'étage A.

Compte tenu des positions de I2, I11, I19 et I13 représentées sur la figure 7, le circuit logique ET de D1 transmet sans condition le signal de transmission d'ordre aux broches AX, LPO et CIG susceptibles de les retransmettre, respectivement, à un module non adjacent ou un circuit extérieur, au module placé en dessous du module situé immédiatement sous le module décrit et au module de gauche à des fins de coordination inférieure des modules d'une même rangée horizontale. Si I13 était en position 1, le signal émis par D1 serait transmis également au module immédiatement inférieur. Si I2 et/ou I9 étaient en position 1 la transmission d'ordre par D1 serait subordonnée à la réalisation d'une condition extérieure K et/ou d'un ordre de coordination inférieur par CID en provenance du module jouxtant de droite. Si I11 était en position O et I9 en position 1 la broche CID délivrerait un ordre de transmission alors dirigé vers les broches CIG, LPO et AX, ainsi qu'au micro-interrupteur I13; inversement la broche CID pourrait émettre un signal provenant, soit de D1, soit de la broche CIG.

Il a été décrit plus haut que l'étage A assurait une sorte de mémorisation de l'ordre d'étape à condition qu'aucun signal ne soit délivré à l'entrée complémentée du second circuit logique ET. Ainsi tout signal reçu par cette entrée constitue un ordre de remise à zéro. Celui-ci peut également être fourni par la broche AR d'arrêt d'urgence de l'ensemble du dispositif, ou par la borne ZPX de remise à zéro par un module quelconque. L'ordre de remise à zéro peut également être obtenu par intervention manuelle par pression du bouton-poussoir Z de D5. A noter que les remises à zéro précitées s'effectuent sans retard. D'autre part compte tenu de la position représentée de I3, cet ordre peut également provenir, avec retard, du bus inférieur de remise à zéro ZI. Si I12 était en position O l'ordre de remise à zéro pourrait provenir du module suivant. Si l'inverseur I3 était en position 1 l'order reçu en provenant de A entraînerait la remise à zéro avec retard du module qui serait alors capable d'une auto-remise à zéro. Les traits en tiretés sur la figure 7 correspondent à des liaisons de remise à zéro.

En position fermée (1) des micro-interrupteurs I14 et I15 les broches LVZ et LVO du sous-ensemble B1 ainsi que les broches LPZ et LPO du sous-ensemble C1 contribuent à réaliser le saut du module considéré; les ordres d'étape et de remise à zéro s'effectuant directement entre le module précédent et le module suivant, le module précédent émet l'ordre d'étape par sa propre broche LPO à la broche LVO du module considéré qui le retransmet directement par sa broche OAP à la broche OPV du module suivant.

De même, le module suivant envoie un ordre de remise à zéro par sa broche ZAV à la broche ZPP du module considéré qui le retransmet à la broche LPZ du module précédent par sa broche LVZ. A noter qu'un isolement total du module considéré nécessite que les micro-interrupteurs I12 et I13 de celui-ci et du module précédent soient commutés en position 1.

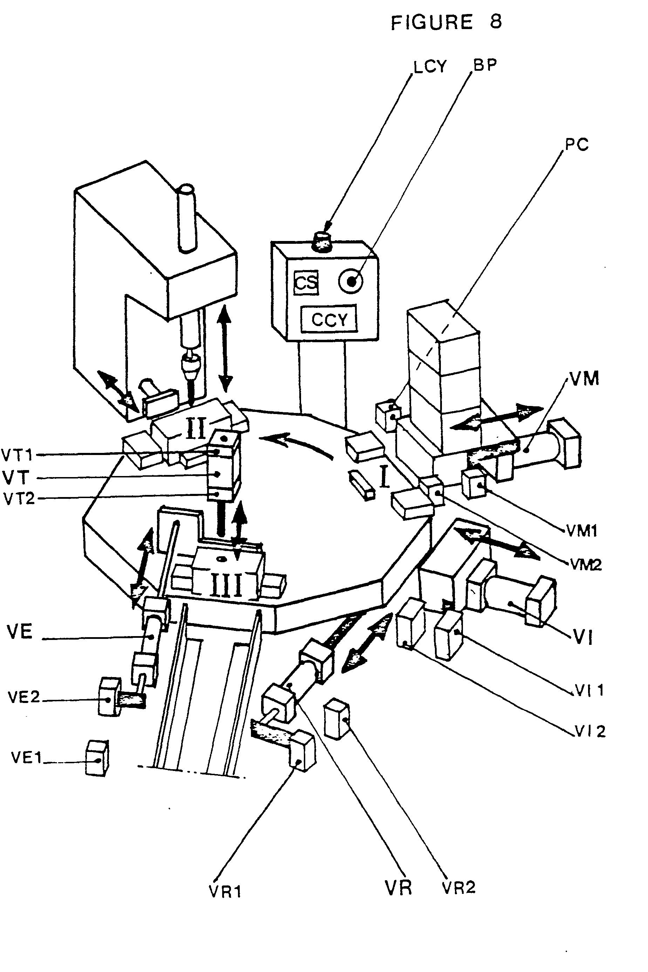

La figure 8 illustre une installation de perçage dont un dispositif modulaire selon l'invention permet, par exemple, d'automatiser le fonctionnement.

L'installation de la figure 8 comporte trois postes de travail régulièrement répartis autour d'un platequ tournant indexé et mû par deux vérins respectivement, VI et VR. Chacun de ces vérins est muni d'un contact de fin de course. Les indices 1 et 2 correspondent respectivement aux positions rentrées et sorties des tiges des vérins. Les vérins de rotation VR et d'indexation VI coopèrent pour provoquer une rotation d'un tiers de tour du plateau.

Un coffret de commande regroupe un bouton-poussoir BP, un commutateur de sélection de mode de fonctionnement CS, un compteur de cycle CCY ainsi qu'une lampe LCY.

Les trois postes de travail (I, II, III) sont destinés à effectuer successivement pour chaque pièce, son chargement, son immobilisation par serrage et son perçage, ainsi qu'une opération de test ou de vérification préalablement à son évacuation.

Un cycle de fonctionnement de l'installation comprend l'émission d'une impulsion au compteur de cycles CCY suivie de la mise en oeuvre simultanée des trois postes de travail sur trois pièces différentes, et se termine par la mise en oeuvre des vérins VR et VI provoquant le déplacement et l'indexation du plateau tournant pour changement de site de travail devant chacun des postes.

Le fonctionnement peut s'effectuer selon deux modes distincts. En fonctionnement de commande cycle par cycle le commutateur de sélection CS étant placé sur la position $\overline{A}$, une impulsion sur le bouton-poussoir BP provoque un seul cycle et le départ d'un second nécessite une nouvelle intervention sur BP.

Le fonctionnement en cycles successifs s'obtient automatiquement en plaçant le commutateur de sélection CS de la position $\overline{A}$ à la position A au cours d'un cycle, la manoeuvre inverse de CS conduit à l'arrêt à la fin du cycle en cours à ce moment.

Le poste de chargement (I) comporte une colonne d'alimentation et un vérin de magasin VM qui assure le chargement sur la plateau tournant de pièces à traiter. La mise en oeuvre du vérin VM est subordonnée à la fermeture d'un contact PC indiquant la présence d'une pièce à charger. Le vérin VM engage alors ladite pièce dans un étrier porté par le plateau.

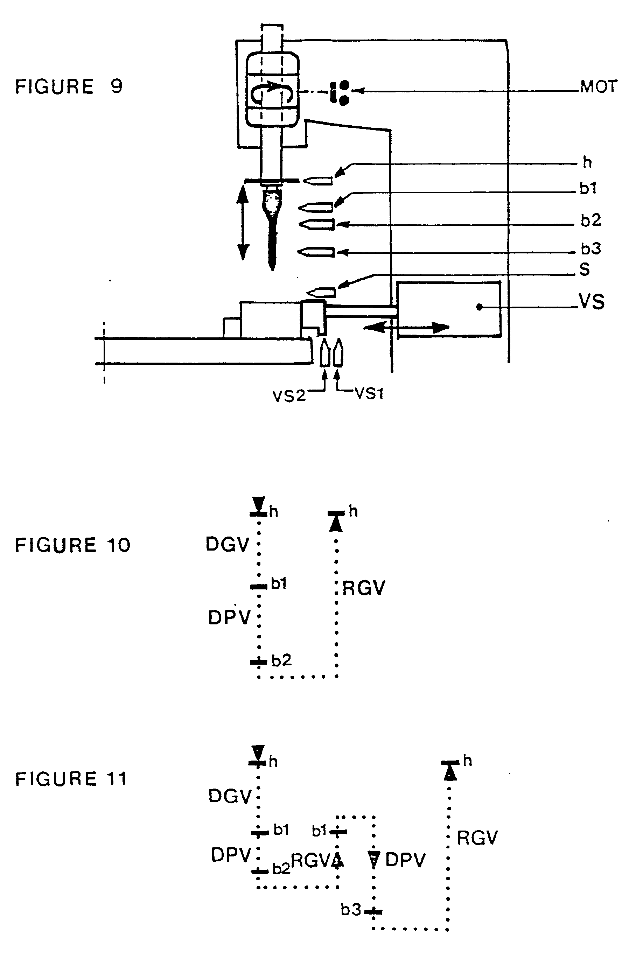

Après rotation d'un tiers de tour la pièce chargée est placée face à un vérin de serrage VS qui l'immobilise dans son étrier. L'opération de perçage proprement dite est alors effectuée. La rotation d'une broche comportant une mèche de perçage est repérée par la fermeture d'un contact MOT. Selon qu'un détecteur S de hauteur de pièce repère que la pièce à percer dépasse ou non, en hauteur une valeur prédéterminée, l'opération de perçage comporte, ou non, un stade de débourrage des copeaux. L'opération de perçage correspond à des mouvements verticaux de la broche dont la commande et le déroulement sont liés à la fermeture de contacts h, $b_1$, $b_2$ et $b_3$ représentés sur la figure 9. Les contacts h et $b_3$ définissent des positions haut (d'attente) et basse (find de perçage) de la mèche. Les contacts $b_1$ et $b_2$ correspondent respectivement à des positions d'approche, et de débourrage.

Si la hauteur de la pièce est inférieure à la valeur critique associée à S, l'opération de perçage comprend (voir figure 10) une descente entre h et $b_1$ à vitesse d'approche ou grande vitesse GV, une descente lente entre $b_1$ et $b_3$ à une vitesse de travail ou petite vitesse PV, puis un retour à grande vitesse à la position haute h. Il n'y a pas débourrage des copeaux.

Si la hauteur de la pièce est supérieure à ladite valeur critique, après la descente d'approche à grande vitesse (voir figure 11), la descente à petite vitesse entre $b_1$ et $b_3$ est interrompue au niveau de $b_2$. La mèche est alors relevée à haute vitesse jusqu'en $b_1$, pour débourrage des copeaux, puis est redescendue à petite vitesse jusqu'en $b_3$.

Après perçage la pièce traitée est desserrée puis transportée sur un tiers de tour en regard du poste de test et d' évacuation. Un témoin est enfoncé dans le trou de perçage sous l'effet d'un vérin de test VT. Si l'enfoncement se produit jusqu'à la profondeur voulue, la pièce traitée, après remontée du témoin, est évacuée sous l'action d'un vérin VE d'évacuation. Une alarme est déclenchée si le poste de test décèle une erreur de perçage, ou si la pièce n'est pas correctement évacuée. Le cycle général correspondant à l'ensemble de l'installation est alors en attent.

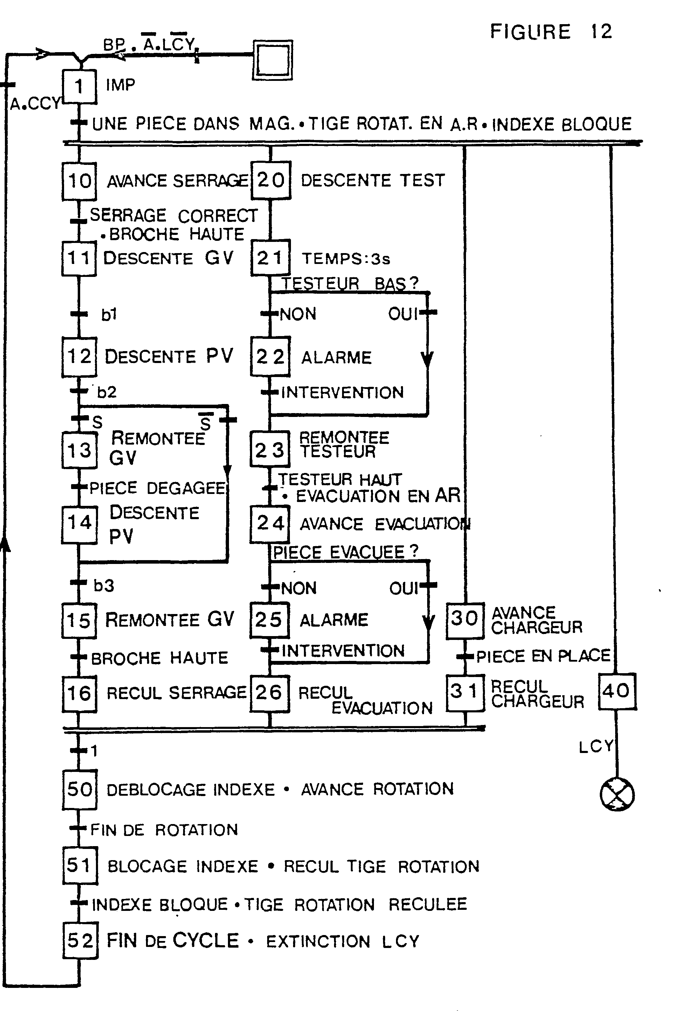

Un premier diagramme fonctionnel de l'instalation de perçage, telle qu'elle vient d'être décrite, est représenté sur la figure 12. Ce diagramme, théorique, est, par exemple, celui établi en tout premier lieu pour concrétiser les conditions du cahier des charges. Il est en particulier établi avant de décider quelle technologie adopter pour l'automatisation de l'installation étuidée.

On observe sur ce diagramme que le départ de tout cycle en mode de fonctionnement par commande cycle par cycle est effectué par une pression sur BP à condition que le commutatuer CS soit en position $\overline{A}$ et que la lampe LCY, indiquant qu'aucun cycle n'est déjà en cours, soit éteinte: (noté par $\overline{LCY}$). La première étape 1 correspond à l'envoi d'une impulsion IMP au compteur de cycle CCY.

Le passage aux étapes suivantes est réalisé à condition qu'une pièce soit chargée (PC), que la tige du vérin de rotation soit rentrée (VR1), et que celle du vérin d'indication soit sortie (VI2). Les doubles traits horizontaux correspondent à des actions de simultanéités, les cases ou carrés à des étapes, et les tirets horizontaux à des conditions (CO) nécessaires au passage à l'étape suivante.

Une étape 40 correspond à l'alimentation de la lampe de cycle LCY placée sur le coffret et qui, allumée pendant toute la durée d'un cycle interdit le lancement manuel de tout autre cycle.

Des étapes 30 et 31 correspondent au poste d'alimentation. Il y a avance du chargeur VM, vérification qu'une piéce est en place puis recul du chargeur.

Des étapes 10 à 16 corresondent au poste de perçage. Il y a serrage de la pièce, descente à grande vitesse jusqu'en $b_1$ puis à petite vitesse jusqu'en $b_2$. Sepon que la hauteur de la pièce à traiter est supérieure (S=1) ou inférieure à la valeur critique précitée, un saut est effectué ou non à l'étape 15, la descente à petite vitesse jusqu'en $b_3$ est précédée, ou non (saut de 13 et 14) d'une remontée à grande vitesse jusqu'à dégagement de la pièce ($b_1=1$). Il y a ensuite remontée de la broche puis desserrage.

Des étapes 20 à 26 contrôlent le fonctionnement du poste de teste et d'évacuation. Il y a descente du témoin, une temporisation de 3 secondes, la vérification que le témoin est descendu au niveau voulu, sinon une alarne est déclenchée, puis la remontée du témoin. Il y a ensuite un recul du vérin d'évacuation, une vérification d'évacuation avec alarme, puis une avance dudit vérin VE.

Des étapes 50 à 52 se déroulent lorsque toutes les étapes 16, 26 et 31 sont terminées. Le double trait représente ici la fin d'une simultanéité. Il y a déblocage de l'index et avance de VR, blocage de l'index et recul de VR, et l'extinction de la lampe LCY. Le cycle est terminé.

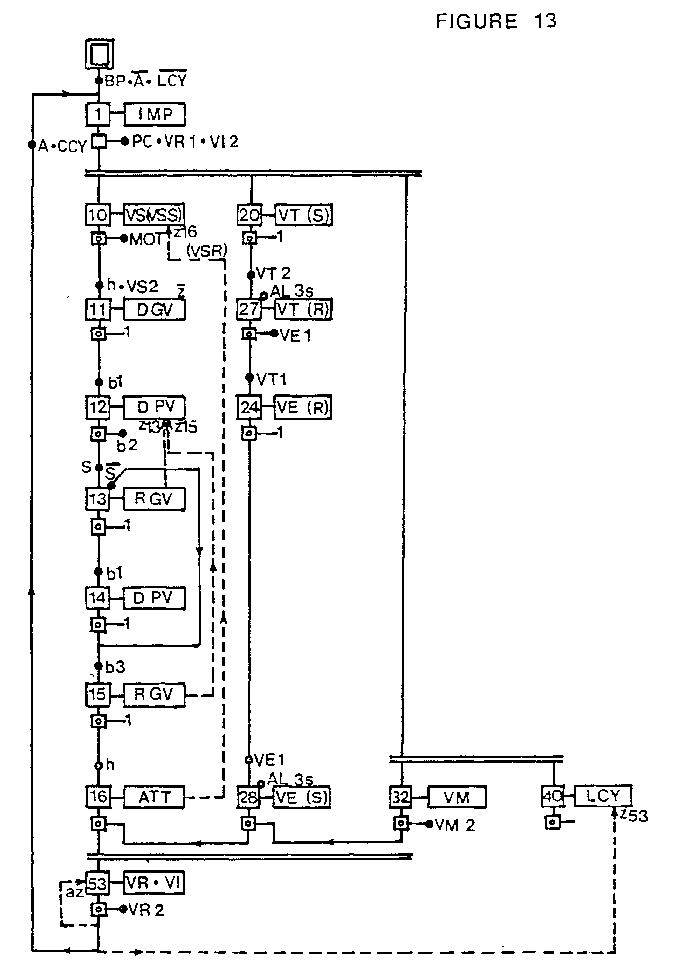

Un second diagramme fonctionnel (figure 13) issue du précédent, tient compte des possibilités offertes par des modules selon l'invention. Il ne comporte que 15 étapes au lieu des 21 étapes de la figure 12.

Ainsi les étapes 21, 22 et 23 se confondent en une seule étape 27 et les étapes 25 et 26 se confondent en une étape 28. Les étapes 30 et 31 d'entrée et de sortie de la tige de VR fusionnent en une étape 32. Quand aux étapes de fin de cycles 50 à 52, liées aux mouvements des tiges de VR et VI, elles se résument en une étape 53. Les petits carrés pointés sous chaque étape correspondent à des conditions de transmission d'ordre de fin d'étape tandis que les points sont des conditions de prise en compte d'un ordre d'étape par une étape suivante. Les lignes en tiretés indiquent comme ci-dessus des liaisons de remise à zéro.

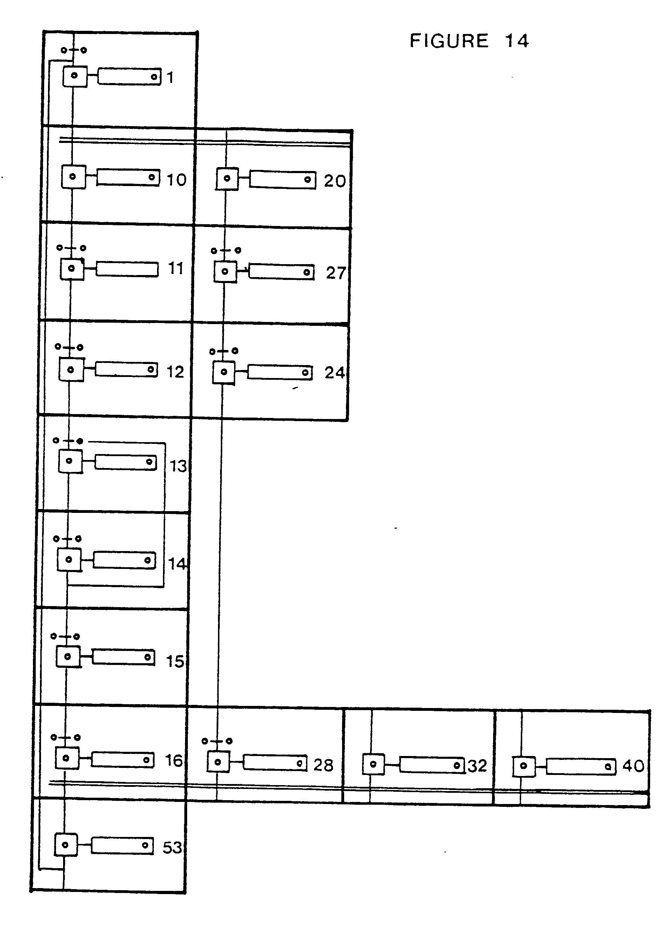

La figure 14 montre l'empilement de modules correspondant au diagramme fonctionnel de la figure 13, les numéros des étapes étant ici reportés sur les modules associés. Les conditions associées aux carrés pointés d'une part et les points d'autre part sont pris en compte respectivement par les broches K et CO des modules associés. A noter que lorsqu'aucune condition ne doit être prise en considération par K, le chiffre 1 placé près du petit carré pointé précise qu'un signal logique 1 est appliqué, par le micro-inverseur I2 par exemple.

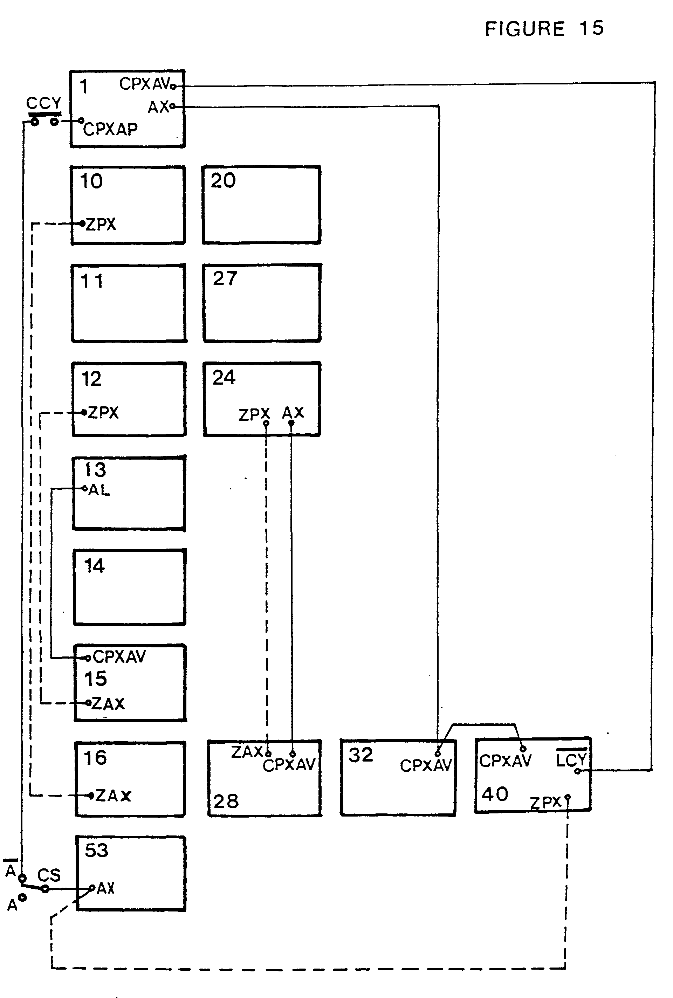

Le détail des quelques rares liaisons intermodulaires à effectuer par filerie est indiqué à la figure 15, les broches qu'elles relient étant précisées. Ces liaisons concernent rarement deux modules adjacents; les liaisons entre ces derniers sont en effet, par principe, automatiquement établies lors des opérations simples d'assemblage des modules, lors de leur empilement. Il peut être avantageux dans certains cas de supprimer tout ou partie de ces quelques tronçons de filerie grâce à mise en oeuvre de modules très simplifiés de remplissage tels que ceux représentés (repère R) sur les figures 3 et 5. Dans le cas d'un empilement de modules embrochables réciproquement la mise en oeuvre de telles briques de remplissage, même dénuées de tout rôle de liaison électrique, permet d'assurer une bonne rigidité mécanique de l'ensemble. Dans le cas d'un empilement de modules enfichables sur un support commun 100, de tels modules se réduisent avantageusement, pratiquement, à leur partie enfichable, aménagée en conséquence. Il est à noter que des modules de remplissage participent avantageusement par leur face avant à la représentation graphique du diagramme fonctionnel associé à l'empilement.

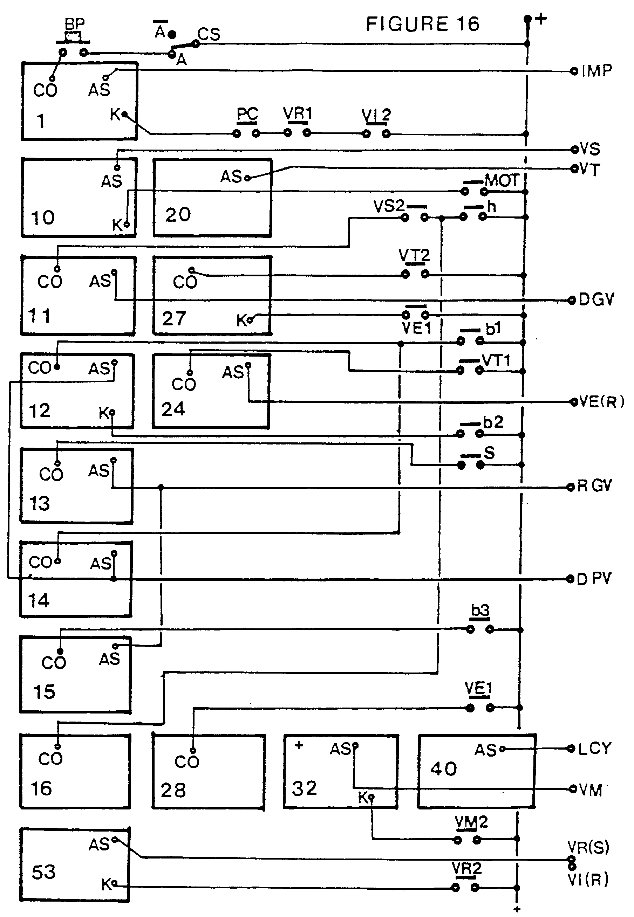

La figure 16 complète la figure 15 puisqu'elle indique le raccordement (par filerie) des éléments de l'environnement permettant la prise en compte des conditions de type CO ou K, et la commande des actions associées de type AS.

Il apparaît ainsi à l'examen des figures 15 et 16, conformément au diagramme fonctionnel de la figure 12, que par exemple, l'émission d'une impulsion IMP au compteur de cycles précité par le module 1 n'a lieu que si il reçoit à sa borne CPXAV un signal indiquant la cessation par le module 40 de l'éclairement de la lampe LCY, de cycle en cours, et qu'elle reçoit en parallèle en un signal correspondant à l'enfoncement d'un bouton-poussoir M pour l'enclenchement d'un cycle en régime manuel. Pour le cycle suivant, si l'inverseur $\overline{A}$/A a été commuté en régime automatique, l'émission de l'impulsion résulte de l'obtention en CPXAP d'un signal de fin du cycle précédent provenant du module 53. La transmission de l'ordre d'étape aux modules suivants est subordonnée à la fermeture simultanée des contacts PC, VR1 et VI2, qui produit d'arrivée en K d'un signal non nul en provenance d'une source à potentiel non nul.

On peut vérifier de même que les branchements des autres modules permettent de piloter le diagramme fonctionnel de la figure 12.

Il va de soi que les exemples de réalisation illustrés, par les figures précédentes n'ont été décrites qu'à titre d'exemple, et que de nombreuses variantes peuvent être proposées par l'homme de l'art sans sortir pour autant du cadre de l'invention.

Ainsi la forme parallélépipédique des briques particulièrement avantageuse dans le cas de modules embrochables est bien adaptée à assurer la matérialisation d'un diagramme fonctionnel comportant des rangées et des colonnes selon deux directions opposées. Le cas échéant n'importe quelle autre forme de matérialisation des briques peut être retenue.

Par ailleurs le processus industriel étudié à titre d'exemple est de type logique ou numérique. N'importe quel autre processus industriel pourrait être piloté par des modules selon l'invention en intercalant des convertisseurs analogiques-numériques en des emplacements prédéterminés, au sein de modules par exemple ou entre des modules et des organes extérieurs de transmission de signal, ou entre modules.

De multiples technologies présentes ou à venir peuvent être adoptées pour tous les aspects de l'invention, tant du point de vue composants eux-mêmes que de leur mise en oeuvre. L'exemple de technologie électronique ici décrit ne constitue pas une limitation.

Quant aux fonctions internes de chaque module, elles peuvent être combinées selon les besoins.

D'autre part des types de modules peuvent comporter un ou des micro-processeurs voire autres éléments complémentaires du genre "mémoire", dont le but est précisément de générer les fonctions internes du module, ces dites fonctions internes pouvant du reste être nombreuses, voire complexes. Des éléments de puissance, d'isolement ou d'amplification peuvent être de même intégrés aux modules sans sortir du cadre de l'invention.

La représentation graphique du diagramme fonctionnel peut être facilitée par le rècouvrement au moins partiel de l'empilement de modules par une plaque, opaque ou non, percée de trous aux emplacements des organes manuels d'intervention et des éléments de signalisation.

Des symboles graphiques, spécifiques des actions associées peuvent être reportés à côté ou à la place des symboles du diagramme fonctionnel.

Les modules peuvent par ailleurs être munis de moyens de connexion en vue d'une duplication à distance de signaux de visualisation et des moyens d'intervention manuelle.

Il est à noter que les modules qui viennent d'être décrits sont adaptés à matérialiser toutes gammes de diagramme fonctionnel, du plus compliqué au plus simple. De par sa structure comportant, outre l'ensemble A de prise en compte d'un signal d'étape et d'une condition CO, un ensemble D d'enclenchement d'une action associée comprenant les sous-ensembles D1, D2, D3, D4 et D5, un module indépendant, selon les fig. 7 ou dérivées de la fig. 6, s'avère en tout à fait adapté à assurer à lui seul des automatismes simples, du genre de la commande d'un actionneur par exemple du type vérin (rentrée et sortie de sa tige). Toutes les variantes cités à propos des ensembles A et D de la fig. 7, leurs commutateurs I1 à I6 par exemple, sont bien sûr également applicables à de tels modules universels indépendants, leur enveloppe et leur présentation n'étant plus alors soumise à aucune contrainte, leurs connexions pouvant s'effectuer par fils conducteurs.

Il va de soi que l'invention couvre également, pour eux-mêmes en tant que nouveaux produits industriels, les modules adaptés à coopérer au sein d'un dispositif modulaire de pilotage du type qui vient d'être défini, avec ses moyens A, B, C et D.

Il est à noter par ailleurs qu'il a toujours été fait mention précédemment d'un ordre d'étape OE, reçu, par un module ou par un dispositif indépendant destiné à être pris directement en compte par les sous-ensembles de retard D4 et d'alarme D3. Tels que ces sous-ensembles ont été décrits, cet ordre doit être émis pendant un temps suffisant pour qu'il puisse être pris en compte simultanément avec la condition de validation CO. Il est à remarquer que les dispositifs selon l'invention peuvent être adaptés à prendre en compte des ordres d'étape fugitifs à condition de les mémoriser au moyen d'une mémoire avantageusement intégrée en amont des sous-ensembles D3 et D4. Dans le cas d'un agencement modulaire, on peut ainsi éviter le maintien de l'étape précédente pendant le temps d'attente de la condition CO de validation de l'ordre d'étape.

On peut noter encore que plusieurs modules peuvent être associés rigidement avec une éventuelle diminution du volume alloué à chacun, des liaisons intermodulaires étant ou non matérialisées au sein de cet ensemble.

## Revendications

1. Dispositif de pilotage d'un processus industriel défini par un diagramme fonctionnel comportant un enchaînement d'étapes élémentaires pouvant comporter des choix, des aiguillages, des simultanéités ou des bouclages, ledit dispositif se composant d'un ensemble de modules qui, par leur assemblage, forment une structure synoptique représentative dudit diagramme fonctionnel, en même temps qu'une chaîne de commande correspondant à ce diagramme,

caractérisé en ce que les modules sont d'un seul type universel dans lequel est incorporé l'ensemble des fonctions types pouvant être nécessaires au traitement du fonctionnement d'un actionneur, chaque module comprenant ainsi un ensemble intégré des étapes élémentaires nécessaires à la gestion des séquences de fonctionnement dudit actionner, ledit ensemble intégré se composant des moyens suivants:

a) un moyen (A) de décision en fonction d'un ordre d'une étape et d'une condition (CO), résultant à un signal d'étape transmis pour aboutir à une fonction de l'actionneur correspondant,

b) un premier moyen d'interface (B1) assurant, par une liaison (5), l'échange de signaux avec un module précédent,

c) un deuxième moyen d'interface (B2) assurant, par des liaisons (7.1; 8.1), l'échange de signaux en amont dudit module avec des modules juxtaposés,

d) un troisième moyen d'interface (C1) assurant, par une liaison (6), l'échange de signaux avec un module suivant,

e) un quatrième moyen d'interface (C2) assurant, par des liaisons (7.2; 8.2), l'échange de signaux en aval dudit module avec des modules juxtaposés,

f) des moyens (D) de gestion du fonctionnement dudit actionneur comprenant:

1) un sous-ensemble de transmission d'ordre (D1), muni d'une possibilité de branchement subordonnant la transmission du signal d'étape depuis le moyen de décision (A) à un évènement extérieur (K), par exemple venant d'un autre module,

2) un sous-ensemble (D2) de sortie vers l'actionneur, muni d'une possibilité de branchement subordonnant directement le signal d'action à ladite condition (CO),

3) un sous-ensemble d'alarme (D3), adapté à détecter la présence du signal d'étape et celle du signal représentant la condition (CO) et comportant un organe de retard (R2), en vue de l'établissement d'un signal d'alarme et/ou d'aiguillage selon la présence ou l'absence de la condition (CO) avant expiration d'un intervalle de temps prédéterminé après l'arrivée du signal d'étape,

4) un sous-ensemble de retard (D4), adapté à différer la prise en compte du signal d'étape incident,

5) un sous-ensemble de remise à zéro (D5), permettant de déterminer la remise au repos du module, au choix, soit sous l'effet de la transmission du signal d'étape par le module à un ou plusieurs modules suivants, soit sous l'effet d'un signal en provenance d'un ou de plusieurs autres modules, et contenant un organe de retard (R3) en vue de différer, pendant un temps donné, la remise à zéro du module,

6) des éléments de sélection (I1 à I6) permettant, pour chacun des modules, de sélectionner tout ou partie desdites fonctions types nécessaires et suffisantes pour le fonctionnement de l'actionneur correspondant, et caractérisé en outre en ce que les modules ainsi organisés sont construits de façon telle qu'ils puissent être assemblés par empilements et juxtapositions, de manière à ce que leur simple mise en place assure les liaisons entre modules adjacents ainsi que tous les enchaînements dudit diagramme fonctionnel, nécessaire pour un système de commande automatique comprenant plusieurs actionneurs.

2. Dispositif selon la revendication 1, caractérisé en ce que les modules comportent une face (11) équipée de moyens de signalisation dynamique (LC, LE, LAU, LAS, LAI...) correspondant à des fonctions internes dans le module considéré et en rapport avec le fonctionnement dudit actionneur, géré par ce dernier, lesdits moyens de signalisation correspondant au déroulement des étapes relatives au fonctionnement de chaque actionneur.

3. Dispositif selon les revendications 1 et 2, caractérisé en ce que la représentation du diagramme fonctionnel global est matérialisée par une ensemble d'illustrations schématiques fractionnaires associées chacune au fonctionnement de l'actionneur géré par le module correspondant et figurant sur ou en regard d'une face dudit module, chacune desdites illustrations schématiques complétant ainsi lesdits moyens de signalisation en conformité avec ledit diagramme fonctionnel.

4. Dispositif selon les revendications 1 à 3, caractérisé en ce que les éléments de sélection desdites fonctions types consistent en des moyens de commutation (I1 à I6).

5. Dispositif selon l'une des revendications 1 à 3, caractérisé en ce que les mbyens d'interface (B2, C2) pour l'échange de signaux avec les modules juxtaposés sont également équipés d'éléments de sélection, en particulier de moyens de commutation (I5 à I15) pour permettre, pour chacun ds modules ainsi équipés, un choix entre diverses possibilités de relations avec les modules associés.

6. Dispositif selon l'une quelconque des revendications 1 à 4, caractérisé en ce que les modules sont embrochables entre eux, et sont équipés de moyens complémentaires de connexion (5, 6) et (7, 8) adaptés à établir des liaisons intermodulaires directes, lesdits modules étant équipés de moyens de connexion (9, 12) avec des évènements extérieurs divers.

7. Dispositif selon l'une quelconque des revendications 1 à 5, caractérisé en ce que les modules sont enfichables par au moins une face extérieure sur un panneau support commun (100) comportant un réseau de faisceaux de liaison (51) et (52) adapté à coopérer avec des barrettes (50) recueillant, sur au moins ladite face de chaque module, l'ensemble des connexions de liaison entre ces modules et avec des évènements extérieurs divers.

8. Dispositif selon l'une quelconque des revendications 1 à 7, caractérisé par une plaque, éventuellement transparente, recouvrant une partie au moins des modules du dispositif et portant une représentation graphique d'au moins une partie du diagramme fonctionnel du processus piloté par le dispositif.

9. Module universel de commande selon les revendications 2, 3, 4 et 8, comprenant un ensemble de fonctions intégrées et pouvant être assemblé avec d'autres modules pour former ou non une structure synoptique représentative du diagramme fonctionnel d'un processus industriel, en même temps qu'une chaîne de commande correspondant à ce diagramme,

caractérisé en ce qu'un ensemble de fonctions types pouvant être nécessaires au traitement du fonctionnement d'un seul actionneur y est incorporé, ledit module comprenant ainsi un ensemble intégré d'étapes élémentaires nécessaires à la gestion des séquences de fonctionnement dudit actionneur, ledit ensemble intégré se composant des moyens suivants:

a) un moyen (A) de décision en fonction d'un ordre d'une étape et d'une condition (CO), résultant à un signal d'étape transmis pour aboutir à une action associée correspondant à la commande de fonctionnement dudit actionneur,

b) un moyen de connectique en une ou plusieurs parties assurant, à l'aide de liaisons d'interface, notammant par fils conducteurs extérieurs au module, les échanges de signaux divers émis ou reçus par ledit module, en rapport avec des évènements extérieurs et/ou d'autres modules,

c) un moyen (D) de gestion du fonctionnement dudit actionneur comprenant:

1) un sous-ensemble de transmission d'ordres (D1), muni d'une possibilité de branchement subordonnant la transmission du signal d'étape depuis le moyen de décision (A) à un évènement extérieur (K), ou venant d'un autre module,

2) un sous-ensemble (D2) de sortie vers l'actionneur, muni d'une possibilité de branchement, subordonnant directement le signal d'action à ladite condition (CO),

3) un sous-ensemble d'alarme (D3), adapté à détecteur la présence du signal d'étape et celle du signal représentant la condition (CO) et comportant un organe de retard (R2), en vue de l'établissement d'un signal d'alarme et/ou d'aiguillage selon la présence ou l'absence de la condition (CO) avant expiration d'un intervalle de temps prédéterminé après l'arrivée du signal d'étape.

4) un sous-ensemble de retard (D4), adapté à différer la pris en compte du signal d'étape incident,

5) un sous-ensemble de remise à zéro (D5), permettant de déterminer la remise au repos du module, au choix, soit sous l'effet de la transmission du signal d'étape par le module à un ou plusieurs modules suivants, soit sous l'effet d'un signal en provenance d'un ou plusieurs autres modules, ou d'évènements extérieurs, et contenant un organe de retard (R3) en vue de différer, pendant un temps donné, la remise à zéro du module,

6) des éléments de sélection (I5 à I15) permettant, pour chacun des modules, de sélectionner tout ou partie desdites fonctions types nécessaires et suffisantes pour le fonctionnement de l'actionneur correspondant et la coopération avec d'autres modules, et caractérisé en outre par une construction telle qu'il puisse être relié ou non, au moyen de fils conducteurs, avec d'autres modules du même type, de manière à assurer la commande automatique d'un système comprenant un ou plusieurs actionneurs.

10. Dispositif selon l'une quelconque des revendications précédentes, caractérisé en ce qu'au moins un module comporte au moins un moyen de technologie numérique et/ou logique, ou au moins un microprocesseur adapté à générer les fonctions types du module.

**Patentansprüche**

1. Vorrichtung für die Steuerung eines industrielles Verfahren, die durch ein Funktionsdiagramm definiert ist. Dieses Funktionsdiagramm besteht aus einer Aneinanderreihung von elementaren Etappen, die Wahlmöglichkeiten, Verzweigungen, Simultanarbeiten oder Schleifenbildungen beinhalten können. Die Vorrichtung besteht aus einer Modulgruppe, die durch ihre Verbindung eine synoptische Struktur, die das Funktionsdiagramm verkörpert, sowie eine Befehltskette bilden, die diesem Diagramm entspricht. Die Vorrichtung ist dadurch gekennzeichnet, dass die Module aus einem universellem Modultypen bestehen, in den die gesamte Funktionspalette integriert ist, die für die Funktionsbearbeitung eines Betätigungsgerätes notwendig ist. Jedes Modul umfasst eine integrierte Gruppe der Grundetappen, die für die Verwaltung der Funktionsfolgen für dieses Betätigungsgerätes notwendig sind. Diese eingebaute Gruppe besteht aus folgenden Mitteln:

a) einem Mittel (A) für Entscheidungen in Abhängigkeit eines Etappenbefehls und einer Bedingung (CO), die zu einer Etappensignalübertragung führen, um einen Funktion des entsprechenden Betätigungsgerätes auszulösen,

b) aus einem ersten Interfacemittel (B1), das über eine Verbindung den Signalaustausch mit dem vorgeschalten Modul gewährleistet,

c) aus einem zweiten Interfacemittel (B2), das durch Verbindungen den Signalaustausch mit dem seitlichen Modul gewährleistet,

d) einem dritten Interfacemittel (C1), das über eine Verbindung den Signalaustausch mit den seitlichen Modulen gewährleistet,

e) einem vierten Interfacemittel (C2) das über Verbindungen den unteren Signalaustausch dieses Moduls mit den nebengeschalteten Modulen gewährleistet,

f) Mittel (D) für die Funktionssteuerung des Betätigungsgerätes, bestehend aus:

1) einer Befehlsübertragungs-Untergruppe (D1), die mit einer Anschlussmöglichkeit versehen ist, die die Übertragung des Etappensignals vom Entscheidungsmittel (1) aus, einem äusseren Ereignis (K), das zum Beispiel von einem anderen Modul kommen kann, unterordnet,

2) einer Ausgangs-Untergruppe (D2) in Richtung Betätigungsgerät, die mit einer Anschlussmöglichkeit versehen ist, die das Aktionssignal direkt dieser Bedingung (CO) unterordnet,

3) einer Alarm-Untergruppe (D3), die dazu geeignet ist, das Vorliegen eines Etappensignals sowie eines Signals zu erkennen, das die Bedingung (CO) darstellt. Sie umfasst darüberhinaus ein Verzögerungsorgan (R2) für die Erstellung eines Alarm- und/oder Verzweigungssignals, je nachdem, ob die Bedingung (CO) vor Auslauf eines Zeitintervalles vorliegt oder nicht, das nach Eintreffen des Etappensignals vordefiniert ist,

4) einer Verzögerungs-Untergruppe (D4), die dazu geeignet ist, die Berücksichtigung eines vorliegenden Etappensignals zu verzögern,

5) einer Nullungs-Untergruppe (D5) die erlaubt, die Ruhestellung des Moduls zu bestimmen. Diese Bestimmung erfolgt entweder durch die Einwirkung der Etappensignalübertragung durch das Modul an ein oder mehrere, nachfolgende Module oder durch die Einwirkung eines Signales, das von einem oder mehreren Modulen kommt. Diese Untergruppe umfasst darüberhinaus einer Verzögerungsorgan (R3), um die Nullung des Modules um einen bestimmte Dauer zu verzögern,

6) Wahlorganen (I1 bis I6), die für jedes Modul die Wahl aller oder eines Teils der Funktionspalette ermöglichen, die für den Betrieb des Betätigungsgerätes notwendig oder ausreichend sind, Die Vorrichtung ist darüberhinaus dadurch gekennzeichnet, dass die so organisierten Module so aufgebaut sind, dass sie durch Stapelung oder Aneinanderfügung so zusammengefügt werden können, dass durch ihre einfache Anbringung die Verbindungen zwichen den benachbarten Modulen sowie alle Aneinanderreiheungen des Funktionsdiagrammes gewährleistet wird, das für ein automatisches Steuersystem mit mehreren Betätigungsgeräten notwendig ist.

2. Vorrichtung gemäss Patentanspruch 1, die dadurch gekennzeichnet ist, dass die Module mit einer Fläche (11) ausgestattet sind, die mit Mitteln für dynamische Signalgebung (LC, LE, LAU, LAS, LAI ...) ausgestattet sind, die internen Funktionen im einschlägigen Model entsprechen. Und bezüglich des Betriebes des Betätigungsgerätes, das von diesem Modul gesteuert wird, entsprechen diese Mittel dem Ablauf der Betriebsetappen eines jeden Betätigungsgerätes.

3. Vorrichtung gemäss Patentanspruch 1 und 2, die dadurch gekennzeichnet ist, dass die Darstellung des globalen Funktionsdiagrammes durch schematische Teilillustrationen erfolgt. Jede dieser Teilillustrationen wird dem Betrieb des Betätigungsgerätes zugeordnet, der durch das entsprechende Modul gesteuert wird. Jede Teilillustration befindet sich auf der Ober-oder Vorderseite des Moduls. Jede schematische Darstellung ergänzt somit die Signalisationsmittel in Übereinstimmung mit dem Funktionsdiagramm.

4. Vorrichtung gemäss Patentanspruch 1 bis 3, die dadurch gekennzeichnet ist, dass die Selektionsmittel für die Funktionenpalette aus Umschaltmitteln (I1 bis I6) bestehen.

5. Vorrichtung gemäss Patentanspruch 1 bis 3, die dadurch gekennzeichnet ist, dass die Interfacemittel (B2, C2) für den Signalaustausch mit nebeneinander geschalteten Modulen enenfalls mit Selektionselementen ausgestattet sind und insbesondere mit Umschaltmitteln (I5 bis I15), um für jedes der so ausgerüsteten Module eine Wahl innerhalb verschiedener Beziehungsmöglichkeiten mit den zugeordeten Modulen zu ermöglichen.

6. Vorrichtung gemäss eines beliebigen Patentanspruches zwischen 1 und 4, die dadurch gekennzeichnet ist, dass die Module durch Ineinanderstecken miteinander verbunden werden und mit zusätzlichen Anschlussmöglichkeiten (5, 6) und (7, 8) ausgestattet sind, die dazu geeignet sind, direkte intermodulare Verbindungen herzustellen, da die Module mit Mitteln ausgerüstet sind, die den Anschluss an verschiedene Umgebungsfunktionen ermöglichen.

7. Vorrichtung gemäss eines beliebigen Patentanspruches zwischen 1 und 5, die dadurch gekennzeichnet ist, dass die Module über mindestens eine Aussenseite auf eine gemeinsame Trägerplatte (100) gesteckt werden können, die ein Strangverbindungsnetz (51) und (52) umfasst, das dazu geeignet ist, mit den Leisten (50) zusammenzuspielen, die an mindestens einer Seite eines jeden Moduls die gesamten Verbindungsanschlüsse zwischen diesen Modulen gruppieren sowie dazu geeignet ist, mit den verschiedenen Umgebungsfunktionen zusammenzuspielen.

8. Vorrichtung gemäss eines beliebigen Patentanspruches zwischen 1 und 7, die dadurch gekennzeichnet ist, dass eine eventuell durchsichtige Platte mindestens einen Teil der Module der Vorrichtung abdeckt und mit einer graphischen Darstellung mindestens eines Teils des Funktionsdiagrammes des von dieser Vorrichtung gesteuerten Verfahrens versehen ist.

9. Universalsteuermodul gemäss der Patentansprüche 2, 3, 4 und 8, das eine integrierte Funktionspalette umfasst und mit anderen Modulen verbunden werden kann, um so eine repräsentative, synoptische Struktur des Funktionsdiagrammes zu bilden oder nicht sowie eine Befehlskette, die diesem Diagramm entspricht. Dieses Modul ist dadurch gekennzeichnet, dass eine Funktionstypenpalette eingebaut ist, die für die Bearbeitung des Betriebes eines einzigen Betätigungsgerätes notwendig sein kann. Das Modul umfasst somit eine integrierte Gruppe elementarer Etappen, die für die Steuerung der Funktionsfolgen des Betätigungsgerätes notwendig sind. Diese integrierte Gruppe besteht aus folgenden Mitteln:

a) einem Mittel (A) für Entscheidungen in Abhängigkeit einer Befehlstappe oder einer Bedingungsetappe (CO), die zu einem Etappensignal führt, das übertragen wird, um eine zugeordnete Aktion auszulösen, die einer Funktionssteuerung des Betätigungsgerätes entpspricht,

b) einem Anschlussmittel aus einem oder mehreren Teilen, die mittels einer Interfaceverbindung und insbesondere durch Leitdrähte ausserhalb des Modules, die verschiedenen Signalaustäusche gewährleisten, die von diesem Modul bezüglich äusserer Umgegungsfunktionen und/oder anderer Module gesendet oder empfangen werden,

c) einem Steuerungsmittel (D) für den Betrieb des Betätigungsgerätes, bestehend aus:

1) einer Befehlsübertragungs-Untergruppe (D1), die mit einer Anschlussmöglichkeit ausgestattet ist, die die Übertragung eines Etappensignals vom Entscheidungsmittel (A) aus einer äusseren Umgebungsfunktion (K) oder einer Funktion unterordnet, die von einem andere Modul herkommt,

2) einer Ausgangs-Untergruppe (D2) in Richtung Betätigungsgerät, die mit einer Anschlüssmöglichkeit versehen ist, die das Aktionssignal direkt dieser Bedingung (CO) unterordnet,

3) einer Alarm-Untergruppe (D3), die dazu geeignet ist, das Vorliegen eines Etappensignals sowie eines Signals zu erkennen, das die Bedingung (CO) darstellt. Sie umfasst darüberhinaus ein Verzögerungsorgan (R2) für die Erstellung eines Alarm- und/oder Verzweigungssignals, je nachdem, ob die Bedingung (CO) vor Auslauf eines Zeitintervalles, das nach Eintreffen des Etappensignals vordefiniert ist, vorliegt oder nicht,

4) einer Verzögerungs-Untergruppe (D4), die dazu geeignet ist, die Berücksichtigung eines vorliegenden Etappensignals zu verzögern,

5) einer Nullungs-Untergruppe (D5) die erlaubt, die Ruhestellung des Moduls zu bestimmen. Diese Bestimmung erfolgt entweder durch die Einwirkung der Etappensignalübertragung durch das Modul an ein oder mehrere, nachfolgende Module oder unter der Einwirkung eines Signales, das von einem oder mehreren Modulen kommt. Diese Untergruppe umfasst darüberhinaus ein Verzögerungsorgan (R3), um die Nullung des Modules um einen bestimmte Dauer zu verzögern.

6) Wahlorgan (I5 bis I15), die ermöglichen, alle oder einen Teil der Funktionstypen für jedes Modul zu wählen, die für den Betrieb des entsprechenden Betätigungsgerätes und die Zusammenwirkung mit andere Modulen notwendig und ausreichend sind. Sie ist darüberhinaus durch einen Aufbau gekennzeichnet, der mittels Leitdrähten eine Verbindung mit anderen Modulen des gleichen Typs so herstellt oder nicht, dass die automatische Steuerung eines Systems mit einem oder mehreren Betätigungsgeräten gewährleistet wird.

10. Mindestens ein Universalmodul umfasst mindestens ein numerisches und/oder logisches Technologiemittel oder mindestens einen Mikroprozessor, der dazu geeignet ist, die Funktionstypen des Moduls zu generieren.

**Claims**

1. An industrial process control device defined by a functional diagram including a chaining of elementary steps which can include choices, switches, simultaneous operations or loops, said device consisting of a set of modules which, through their assembly, form a synoptical structure representative of said functional diagram, at the same time as a control chain corresponding to this diagram, characterized in that the modules are of a sole universal type incorporating all the standard functions which may be necessary for processing the operation of an actuating device, each module thus including an integrated set of elementary steps needed for managing the operating sequences of said actuating device, said integrated assembly being made up of the following means:

a) a means (A) of making decisions according to a step order and a condition (CO), resulting from a step signal transmitted to culminate in a function of the corresponding actuating device,

b) an initial means of interface (B1) which, through a link (5), ensures the exchange of signals with a prior module,

c) a second means of interface (B2) ensuring by links (7.1; 8.1), the exchange of signals upstream of said module with adjacent modules,

d) a third means of interface (C1) ensuring through link (6), the exchange of signals with a following module,

e) a fourth means of interface (C2) ensuring by links (7.2; 8.2), the exchange of signals downstream of said modules with adjacent modules,

f) means (D) of managing the operation of said actuating device and including:

1) an order transmission subassembly (D1) offering the possibility of connection subordinating the transmission of the step signal from the decision means (A) to an external event (K), for instance from another module,

2) an output subassembly (D2) to the actuating device, featuring a possibility of connection which directly subordinates the action signal on said condition (CO),

3) an alarm subassembly (D3) adapted to detcting the presence of a step signal and that of the signal representing condition (CO) and including a delay device (R2) with a view to establishing an alarm and/or switching signal, depending on the presence or absence of condition (CO), before the expiration of a predetermined interval of time after the appearance of the step signal,

4) a delay subassembly (D4) adapted to deferring the acknowledgement of the incident step signal,

5) a reset to zero subassembly (C5) which returns the module to its idle state, either under the effects of step signal transmission by the module to one or several following modules, or under the effect of a signal coming from one or several other modules, containing the delay device (R3) in order to defer for a given period of time the reset to zero of the module.

6) selection elements (I1 to I6) which, for each of the modules, makes it possible to select all or part of said standard functions, necessary and sufficient for the operation of the corresponding actuating device and characterized in addition in that the modules organized in this manner are constructed in such as way that they can be assembled by stacks and juxtapositions so that their simple positioning ensures links between adjacent modules and all the chainings of said functional diagram needed for an automatic control system comprising several actuating devices.

2. A device according to claim 1, characterized whereby the modules include a face (11) equipped with dynamic signalling facilities (LC, LE, LAU, LAS, LAT, etc.), corresponding to internal functions in the module in question and related to the operation of said actuating device, controlled by the latter, said signalling means corresponding to the run through of steps relative to the operation of each actuating device.

3. Device according to claims 1 and 2 characterized in that the representation of the overall functional diagram is materialized by a set of fractional schematic illustrations each associated with the operation of the actuating device controlled by the corresponding module and appearing on or opposite one side of the module with each of these schematic illustrations thus completing said signalling means in conformity with said functional diagram.

4. A device according to claims 1 to 3, characterized whereby the elements selecting said standard functions consist of switching means (I1 to I6).

5. A device according to one of claims 1 to 3, characterized whereby the interface means (B2, C2) for the exchange of signals with adjacent modules are also equipped with selection elements, in particular means of switching (I5 to I15) to permit for each of the modules equipped in this manner, a choice between various possibilities of relations with associated modules.

6. A device according to any of claims 1 to 4, characterized in that the modules plug into one another and are equippped with complementary means of connection (5, 6) and (7, 8) adapted to establishing direct inter-modular links, said modules being equipped with means of connection (9, 12) with miscellaneous external events.

7. A device according to any of claims 1 to 5, characterized whereby the modules plug in by at least one outer face onto a common support panel (100) including a network of interconnection harnesses (51) and (52), designed to cooperate with bars (50) collecting, on at least one face of each module, all the interconnections with the module and with miscellaneous external events.

8. A device according to any of claims 1 to 7, characterized by a plate, possibly transparent carrying at least one part of the modules of the device and bearing a graphic representation of at least one part of the functional diagram of the process controlled by said device.

9. A universal control module according to claims 2, 3, 4 and 8, including a set of integrated functions and capable of being assembled with other modules to form or not form a synoptical structure representative of the function diagram of an industrial process, at the same time as a control chain corresponding to that diagram, characterized in that the set of standard functions which may be necessary for processing the operation of a single actuating device is incorporated therein, said module thus including an integrated set of elementary stages needed for managing the operating sequences of said actuating device, said integrated assembly being made up of the following means:

a) a means (A) of making a decision according to a step order and a condition (CO), resulting from a step signal transmitted to culminate in an associated action corresponding to the operating command of said actuating device,

b) a means of connection in one or several parts ensuring, by means of interface links and more particularly by conducting wires external to the module, the exchange of miscellaneous signals transmitted or received by said module, in relation to external events and/or other modules,

c) a means (D) of managig the operation of said actuating device and including:

1) an order transmission subassembly (D1) having a possibility of connection subordinating the transmission of the step signal from the decision making means (A) to an external event (K), or from another module,

2) an output subassembly (D2) to the actuating device, having a possibility of connection which directly subordinates the action signal upon said condition (CO),

3) an alarm subassembly (D3), adapted to detecting the presence of the step signal and that of the signal representing the condition (CO) and including a delay device (R2) with a view to establishing an alarm and/or switching signal depending on whether condition (CO) is present or absent, before expiration of the predetermined time interval after the arrival of the step signal,

4) a delay subassembly (D4), designed to defer the acknowledgement of the incident step signal,

5) a reset to zero subassembly (D5) serving to determine the de-energizing of the module as chosen, either under the effect of step signal transmission by the module to one or several subsequent modules or under the effect of a signal originating from one or several other modules or from external events, and containing a delay device (R3) designed to defer for a given period of time the reset to zero of the module,

6) selecting elements (I5 to I15) which, for each of the modules, make it possible to select all or part of said standard functions necessary and sufficient for the operation of the corresponding actuating device and for cooperation with the other modules and characterized in addition by a construction such that it may be or may not be connected, through conducting wires, to other modules of the same type in such a manner as to ensure the automatic control of a system comprising one or several actuating devices.

10. A device according to any of the prior claims, characterized in that at least one module includes at least one means of digital and/or logic technology or at least one microprocessor adapted to generating the standard functions of the module.

5
7
4
1
10
3
8
11
2
6

FIGURE 2
5
B1
B2
7.1
8.1
D
9.1
A
CO
AS
12
9·2
7.2
8·2
C2
C1
6
FIGURE 3
R

FIGURE 4

5
12
9
7
LAL
LC
LE
M
TZ
TAL
TRE
LAU
Z
LAS
6
8

FIGURE 5
52
50
100
R
51
FIGURE 6
5
6
7
8
9
12

FIGURE 7

LVZ
ZAV
5
OPV
LVO
B1
B2
7.1
SSG
SS
I7
SSD
8.1
ZSG
ZS
I8
ZSD
ZAX
CPX AV
D4
D3
LAL
CPXAP
9.1
R1
R2
AL
LE
I4
I5
D
A
LC
I1
CO
D2
I6
LAU
AS
M
LAS
Z
AG
12
AR
D5
R3
D1
I 2
I 3
K
ZPX
9.2
AX
C2
I 11
CIG
C1
I9
CID
ZI
I10
ZIG
ZID
7.2
8.2
I15
I12
I 13
I 14
LPZ
ZPP
6
OAP
LPO

FIGURE 8

LCY
BP
PC
CS
CCY
VM
II
VT1
VT
VT2
I
VM1
VM2
III
VE
VI
VE2
VI 1
VI 2
VE1
VR1
VR
VR2

FIGURE 9

MOT
h
b1
b2
b3
S
VS
VS2
VS1

FIGURE 10

h
h
DGV
b1
RGV
DPV
b2

FIGURE 11

h
h
DGV
b1
b1
RGV
DPV
b2
RGV
DPV
b3

FIGURE 12

BP . A.LCY
A.CCY
1 IMP
UNE PIECE DANS MAG. • TIGE ROTAT. EN A.R • INDEXE BLOQUE
10 AVANCE SERRAGE
SERRAGE CORRECT • BROCHE HAUTE
11 DESCENTE GV
b1
12 DESCENTE PV
b2
S
S
13 REMONTEE GV
PIECE DEGAGEE
14 DESCENTE PV
b3
15 REMONTEE GV
BROCHE HAUTE
16 RECUL SERRAGE
20 DESCENTE TEST
21 TEMPS:3s
TESTEUR BAS ?
NON
OUI
22 ALARME
INTERVENTION
23 REMONTEE TESTEUR
TESTEUR HAUT • EVACUATION EN AR
24 AVANCE EVACUATION
PIECE EVACUEE ?
NON
OUI
25 ALARME
INTERVENTION
26 RECUL EVACUATION
30 AVANCE CHARGEUR
PIECE EN PLACE
31 RECUL CHARGEUR
40
LCY
1
50 DEBLOCAGE INDEXE • AVANCE ROTATION
FIN DE ROTATION
51 BLOCAGE INDEXE • RECUL TIGE ROTATION
INDEXE BLOQUE • TIGE ROTATION RECULEE
52 FIN DE CYCLE • EXTINCTION LCY

FIGURE 13

BP • $\overline{A}$ • $\overline{LCY}$
1 IMP
A • CCY
PC • VR 1 • VI 2
10 VS(VSS)
MOT
z16
(VSR)
20 VT (S)
1
VT 2
AL 3s
27 VT (R)
VE 1
VT1
24 VE (R)
1
h • VS2
$\overline{z}$
11 DGV
1
b1
12 D PV
z13
z15
b2
S
$\overline{S}$
13 R GV
1
b1
14 D PV
1
b3
15 R GV
1
h
16 ATT
VE1
AL 3s
28 VE (S)
32 VM
VM 2
40 LCY
z53
53 VR • VI
az
VR 2

FIGURE 14
1
10
20
11
27
12
24
13
14
15
16
28
32
40
53

FIGURE 15

1
CPXAV
AX
CCY
CPXAP
10
ZPX
20
11
27
12
ZPX
24
ZPX
AX
13
AL
14
CPXAV
15
ZAX
16
ZAX
ZAX
CPXAV
28
32
CPXAV
CPXAV
LCY
40
ZPX
53
AX
A
CS
A

FIGURE 16
BP
A
CS
A
+
IMP
CO
AS
1
K
PC
VR1
VI2
VS
VT
AS
10
K
AS
20
MOT
VS2
h
VT2
CO
AS
11
CO
27
K
DGV
VE1
b1
CO
AS
12
K
CO
AS
24
VT1
VE(R)
b2
S
CO
AS
13
RGV
CO
AS
14
D PV
b3
CO
AS
15
VE1
CO
16
CO
28
+
AS
32
K
AS
40
LCY
VM
VM2
AS
53
K
VR(S)
VR2
VI(R)
+